# EUROPÄISCHE PATENTSCHRIFT

(11) **EP 1 593 786 B1**
(45) Veröffentlichungstag und Bekanntmachung des Hinweises auf die Patenterteilung: **18.03.2009**
(21) Anmeldenummer: 05008586.9
(22) Anmeldetag: 20.04.2005
(51) Int. Cl.: E03C 1/33

(54) **Befestigungsvorrichtung für Geräteeinsätze in Arbeitsplatten**
Fixing device for appliances in work tops
Dispositif de fixation pour éléments dans plaques de travail

(30) Priorität: 03.05.2004 DE 102004021530
(43) Veröffentlichungstag der Anmeldung: 09.11.2005
(73) Patentinhaber: fischerwerke GmbH & Co. KG, 72178 Waldachtal (DE); BLANCO GmbH + Co KG, 75038 Oberderdingen (DE)
(72) Erfinder: Daly, Aaron, 72285 Pfalzgrafenweiler (DE); Fischer, Rainer, 72178 Waldachtal (DE); Elsinger, Bernd, 75056 Sulzfeld (DE); Spruner Von Mertz, Gert, 75031 Eppingen (DE)

(56) Entgegenhaltungen:
- DE-U1- 20 204 674

## Beschreibung

Die Erfindung betrifft eine Vorrichtung mit den Merkmalen des Oberbegriffs des Anspruchs 1 zum Befestigen von Geräteeinsatzen in Arbeitsplatten, insbesondere von Spülen in Küchenarbeitsplatten.

Bei der Montage wird zunächst eine Aussparung in die Arbeitsplatte eingebracht, beispielsweise mit einer Stichsäge. Zur eigentlichen Befestigung sind unterschiedliche Systeme bekannt. Sie können einerseits eingeteilt werden in Systeme, die nach dem Einsetzen des Geräteeinsatzes von unten montiert werden (z. B. DE 30 40 180 A1, EP 0 769 591 B1), und andererseits in Systeme, deren Bauteile zuvor vormontiert werden. Beim Einsetzen des Geräteeinsatzes greifen die Bauteile ineinander und sichern so einen festen Halt. Derartige Systeme bieten den Vorteil, dass nicht überkopf an schwer zugänglichen Stellen montiert werden muss. Eine weitere Unterteilung solcher Systeme kann anhand der Art des Ineinandergreifens erfolgen. Während beispielsweise in DE 43 18 828 C2 ein einfacher Eingriff eines Halteelements mit Kontakt- und Anlaufschräge in ein Federelement beschrieben ist, schlagen sowohl DE 44 37 630 C1 als auch DE 195 17 868 C2 eine stufenweise Verrastung vor. Diese haben gegenüber einem einfachen Eingriff den Vorteil, dass das an der Arbeitsplatte zu befestigende Bauteil nicht exakt in Eingriffsrichtung positioniert werden muss. Dies ist gerade bei unterschiedlichen Plattendicken vorteilhaft.

Ein grundsätzliches Problem dieser Befestigungen liegt in der mangelnden Fähigkeit, einen fertigungsbedingten ungewollten Versatz senkrecht zur Aussparungskante zwischen Aussparung und Geräteeinsatzes auszugleichen. In DE 195 17 868 C2 erfolgt die Rasterung durch Sperrklinken in Verbindung mit einer Riffelung. Dabei sind die Sperrklinken an dem an der Arbeitsplatte angebrachten Halteelement angeordnet, während die Riffelung Teil des am Geräteeinsatzes befestigten Ankerteils ist. Ein derartiger Formschluss erfolgt nur sicher, wenn das Ankerteil ohne signifikante Schiefstellung von den Sperrklinken gefasst wird. Ähnlich problematisch ist die in DE 44 37 630 C1 vorgeschlagene Einrastung eines Raststegs in Rastzacken. Der Raststeg ist Teil des am Geräteeinsatzes befestigten Ankerteils. Das an der Arbeitsplatte angebrachte Halteelement weist U-förmig geformte Schenkel auf, dessen einer Schenkel der Anbringung an der Arbeitsplatte und dessen anderer, elastisch auffederbare Schenkel zum Halteschenkel weisende Rastzacken aufweist. Da das Ankerteil nicht beidseitig vom Halteelement geklemmt wird, kann es bei einer toleranzbedingten Schiefstellung des Raststegs leicht zum Ausklinken der Verbindung kommen.

In der Druckschrift DE 202 04 674, die die Merkmale des Oberbegriffs des Anspruchs 1 offenbart, wird daher vorgeschlagen, das Halteelement mit einem Rastkanal und das Fußteil mit einer Zahnleiste zu versehen und das Ankerteil damit im Rastkanal in verschiedenen Raststufen verankerbar zu machen. In Verbindung mit entsprechenden Einführschrägen kann hierdurch eine sichere Verankerung auch bei einem Versatz der Geräteeinsatzes senkrecht zur Aussparungskante erreicht werden. Allerdings weist das vorgeschlagene Halteelement den Nachteil auf, dass ein Versatz parallel zur Aussparungskante insbesondere auch nach einer provisorischen Befestigung nur sehr begrenzt möglich ist. Zwar wird vorgeschlagen, dass das Ankerteil in der Einklipsaussparung des Halteblechs horizontal verschiebbar gestaltet ist, in der Praxis ist eine derartige Verschiebbarkeit unter Zug, wie bei einer provisorischen Befestigung, aufgrund der Reibverhältnisse nur sehr begrenzt möglich.

Der Erfindung liegt daher die Aufgabe zugrunde, eine Befestigungsvorrichtung für Geräteeinsätze in Arbeitsplatten zu schaffen, die bei ähnlich guten Haltewerten verbesserte Eigenschaften in Bezug auf einen Versatz parallel zur Aussparungskante aufweist.

Diese Aufgabe wird erfindungsgemäß durch die Merkmale des Anspruchs 1 gelöst. Die Befestigungsvorrichtung besteht aus einem Halteelement, das an die Aussparungskante der Arbeitsplatte angebracht wird und einen Rastkanal aufweist. An den Geräteeinsatz wird ein Ankerteil mit einem eine Zahnleiste aufweisenden Fußteil angebracht, welches in das Halteelement in verschiedenen Raststufen verankerbar ist. Das Fußteil rastet in einen mindestens eine Rastkante aufweisenden Rastkanal ein und wird dabei geklemmt und geführt. Um die angestrebte Flexibilität bezüglich eines seitlichen Versatzes zu erreichen, bilden das Ankerteil und der Geräteeinsatz ein Drehlager. Dies kann beispielsweise durch eine kreisförmige Ausnehmung im Geräteeinsatz und einen entsprechenden Lagerzapfen am Ankerteil erreicht werden. Hierdurch kann das Ankerteil auf einer Ebene parallel zur Aussparungskante verkippt werden und das Fußteil entsprechend dem seitlichen Versatz folgen. Vorzugsweise weist das Ankerteil federnde Drehbegrenzungselemente auf, die das Ankerteil bis zum Einführen des Fußteils in das Halteelement senkrecht halten. Hierdurch wird einerseits erreicht, dass das Ankerteil nicht durch ein versehentliches Berühren in eine Schiefstellung gerät, in der es nicht mehr in den Rastkanal einführbar ist. Andererseits bleibt das Ankerteil verdrehbar, was das Einführen in den Rastkanal erleichtert und eine Verschiebbarkeit bei noch provisorischer Befestigung ermöglicht. Um die Flexibilität weiter zu erhöhen, schlägt die Erfindung vor, dass am Halteelement mehrere quer zur Aussparungskante verlaufende Rastkanäle parallel zueinander angeordnet sind. Hierdurch wird es möglich, dass ein Fußteil je nach Position in einen der Rastkanäle eingeführt wird. Weiterhin lässt sich das Fußteil durch die Ausrichtung senkrecht zur Aussparungskante derart gestalten, dass es sich einfach auf einer Ebene parallel zur Aussparungskante verformen lässt. In Kombination mit dem Drehlager am Geräteeinsatz wird damit erreicht, dass auch dann noch eine sehr gute Verschiebbarkeit entlang der Aussparungskante gegeben ist, wenn das Fußteil schon in einem der Rastkanäle eingerastet ist.

Zur Demontage der Befestigungsvorrichtung schlägt die Erfindung vor, das Halteelement mit einer geschlitzten Schraubenaufnahme zu versehen. Hierdurch ist die Schraubenaufnahme gezielt in Bezug auf Zugkräfte geschwächt, während die betriebsbedingten Querkräfte sehr gut aufgenommen werden könne. Durch Ansatz eines Hebels an einer Hebelansatzfläche des Halteelements kann das Halteelement von der Schraube gelöst werden, womit die Verbindung des Geräteeinsatzes zur Arbeitsplatte aufgehoben wird. Insbesondere wenn das Ankerteil mehrere Fußteile aufweist, die in mehreren Rastkanälen verankert sind, ist dies einfacher, als alle Fußteile gleichzeitig aus der Rastverbindung zu lösen.

Die Erfindung wird nachfolgend anhand eines in der Zeichnung dargestellten Ausführungsbeispiels näher erläutert. Es zeigen:
- Figur 1: die Vorrichtung bei der Montage in einer perspektivischen Schnittdarstellung;
- Figur 2: das Ankerteil in einer perspektivischen Darstellung; und

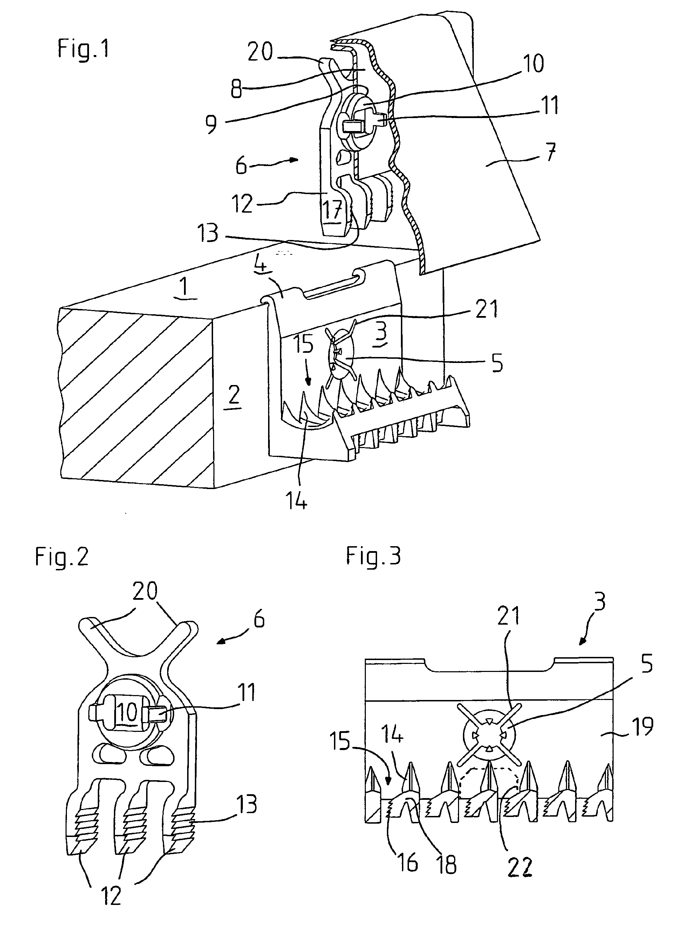

- Figur 2: das Halteelement in einem Längsschnitt.

In Figur 1 ist die Vorrichtung bei der Montage gezeigt. In die Arbeitsplatte 1 wird zuvor eine Aussparung eingebracht, wodurch sich die Aussparungskante 2 ergibt. An dieser wird das Halteelement 3 angebracht, so dass der Anschlaghaken 4 am oberen Rand der Arbeitsplatte 1 (siehe auch Figur 3) anschlägt. Zur Befestigung kann ein Nagel oder eine Befestigungsschraube (nicht dargestellt) verwendet werden. Das Halteelement 3 weist hierzu eine Schraubenaufnahme 5 auf. In einem weiteren Schritt der Vormontage wird das Ankerteil 6 (siehe auch Figur 2) am Geräteeinsatz 7 angebracht. Am Geräteeinsatz 7 ist hierzu eine Blechlasche 8 mit einer kreisförmigen Ausnehmung 9 angebracht. Das Ankerteil 6 weist einen Lagerzapfen 10 mit Rastnasen 11 auf. Der Lagerzapfen 10 bildet gemeinsam mit der Ausnehmung 9 ein Drehlager. Die Rastnasen 11 sorgen dafür, dass das Ankerteil 6 nach dem Einklipsen in die Blechlasche 8 sicher gehalten wird. Weiterhin weist das Ankerteil 6 mehrere Fußteile 12 mit Zahnleisten 13 auf. Mit Hilfe der Einführschrägen 14 werden die Fußteile 12 in Rastkanäle 15 des Halteelements 3 eingeführt. Aufgrund der schmalen Anbindung der Fußteile 12 können diese parallel zur Aussparungskante 2 flexibel nachgeben. Aufgrund der Tatsache, dass das Halteelement 3 sechs Rastkanäle 15 aufweist, während das Ankerteil 6 lediglich drei Fußteile 12 aufweist, brauchen Halteelement 3 und Ankerteil 6 nicht mittig zueinander stehen, sondern können beispielsweise aufgrund einer groben Vorpositionierung des Halteelements 3 versetzt zueinander stehen. Die Zahnleisten 13 rasten innerhalb der Rastkanäle 15 der Halteelemente 3 ein. Wie aus Figur 3 deutlich wird, weist das Halteelement 3 als Zähne ausgebildete Rastkanten 16 auf. Mit der der Zahnleiste 13 gegenüberliegenden Rückseite 17 liegen die Fußteile 12 im Rastkanal 15 an und werden hierdurch geklemmt. Aufgrund des schmal ausgeführten Stegs 18 zwischen dem Grundkörper 19 des Halteelements 3 und den Rastkanten 16 können die Rastkanten 16 federnd schwenken. Hierdurch wird das Einführen des Eingriffsteils 9 in den Rastkanal 15 erleichtert und gleichzeitig ein sicheres Einrasten der Zahnleiste 12 in die Rastkanten 16 gewährleistet. Bei der Montage der Vorrichtung wird der Geräteeinsatz 7 zunächst entsprechend den vorgenannten Schritten lose gefügt, dann die in die entgültige Position gebracht und schließlich gegen die Arbeitsplatte 1 gepresst, beispielsweise entgegen der Kraft einer Dichtlippe (nicht dargestellt) am Rand des Geräteeinsatzes 7. Bei der entgültigen Positionierung ist es wichtig, dass die Halteelemente 3 gegenüber den Ankerteilen 6 beweglich bleiben. Senkrecht zur Aussparungskante 2 wird dies dadurch erreicht, dass die Zahnleisten 13 schmaler als die Rastkanäle 15 sind. Parallel zur Aussparungskante 2 ist eine Bewegung einerseits - wie erwähnt - durch die schmale Anbindung der Fußteile 12 möglich. Andererseits kann sich das Ankerteil 6 als ganzes gegenüber der Blechlasche 8 verdrehen, was eine Verschiebung von einigen Millimetern erlaubt. Um die erste Positionierung zu erleichtern und ein versehentliches Verdrehen des Ankerteils zu vermeiden, weist das Ankerteil federnde Drehbegrenzungselemente 20 auf. Diese stützen sich gegebenenfalls an der Blechlasche 8 ab.

Im Falle einer notwendigen Demontage der Vorrichtung, beispielsweise zum Austausch des Geräteeinsatzes, kann das Halteelement 3 ohne Lösen der Befestigungsschraube entfernt werden, indem an der Unterkante zwischen Aussparungskante 2 und Halteelement 3 ein Hebelwerkzeug (beispielsweise ein Schraubendreher) angesetzt wird. Hierzu weist das Halteelement eine Hebelansatzfläche 22 im Form einer der Arbeitsplatte zugewandten Aussparung auf. Aufgrund der Schlitze 21 in der Schraubenaufnahme 5 lässt sich diese derart verformen, dass der Schraubenkopf durch die Schraubenaufnahme 5 hindurchgleitet und das Halteelement 3 hierdurch freikommt. Anschließend kann die Befestigungsschraube entfernt werden.

## Patentansprüche

1. Vorrichtung bestehend aus einem Geräteeinsatz (7) und einer Vorrichtung zur Befestigung des Geräteeinsatzes (7) in einer Arbeitsplatte (1), insbesondere einer Spüle in einer Küchenarbeitsplatte, die Befestigungsvorrichtung bestehend aus einem an der Aussparungskante (2) der Arbeitsplatte anbringbaren Halteelement (3) und einem am Geräteeinsatz (7) angeordneten Ankerteil (6), welches in das Halteelement (3) in verschiedenen Raststufen verankerbar ist, wobei das Halteelement (3) mindestens einen Rastkanal (15) mit mindestens einer Rastkante (16) aufweist, und wobei das Ankerteil (6) mindestens ein Fußteil (12) mit einer Zahnleiste (13) aufweist, das in dem Rastkanal (15) einrastbar ist, **dadurch gekennzeichnet, dass** das Ankerteil (6) mit dem Geräteeinsatz (7) ein Drehlager (9, 10) bildet.

2. Vorrichtung nach Anspruch 1, **dadurch gekennzeichnet, dass** das Ankerteil (6) federnde Drehbegrenzungselemente (20) aufweist.

3. Vorrichtung nach Anspruch 1, **dadurch gekennzeichnet, dass** das Halteelement (3) mehrere, quer zur Aussparungskante (2) verlaufende Rastkanäle (15) aufweist.

4. Vorrichtung nach Anspruch 1, **dadurch gekennzeichnet, dass** das Halteelement (3) durch Aushebeln von der Arbeitsplatte (1) lösbar ist.

5. Vorrichtung nach Anspruch 4, **dadurch gekennzeichnet, dass** das Halteelement (3) eine geschlitzte Schraubenaufnahme (5) aufweist.

6. Vorrichtung nach Anspruch 4, **dadurch gekennzeichnet, dass** das Halteelement (3) eine Hebelansatzfläche (22) aufweist.

## Claims

1. Device consisting of an inset appliance (7) and a device for fixing the inset appliance (7) in a worktop (1), especially a sink in a kitchen worktop, the fixing device consisting of a holding element (3) mountable at the edge (2) of the aperture in the worktop and an anchoring member (6) arranged on the inset appliance (7), which anchoring member is anchorable in the holding element (3) in various stepped degrees of locking, the holding element (3) having at least one locking channel (15) with at least one locking edge (16), and the anchoring member (6) having at least one foot member (12) with a serrated strip (13), which foot member is engageable in the locking channel (15), **characterized in that** the anchoring member (6) forms, with the inset appliance (7), a pivot bearing (9, 10).

2. Device according to claim 1, **characterized in that** the anchoring member (6) has resilient rotation-limiting elements (20).

3. Device according to claim 1, **characterized in that** the holding element (3) has a plurality of locking channels (15) running transversely with respect to the aperture edge (2).

4. Device according to claim 1, **characterized in that** the holding element (3) is releasable from the worktop (1) by levering-out.

5. Device according to claim 4, **characterized in that** the holding element (3) has a slotted screw-receiver (5).

6. Device according to claim 4, **characterized in that** the holding element (3) has a lever-application surface (22).

## Revendications

1. Dispositif composé d'un appareil intégré (7) et d'un système de fixation dudit appareil intégré (7) dans un panneau de travail (1), en particulier d'un évier dans un plan de travail de cuisine, ledit système de fixation comprenant un élément de retenue (3) pouvant être mis en place sur le bord (2) de l'évidement du panneau de travail, et une pièce d'ancrage (6) disposée sur l'appareil intégré (7) et pouvant être ancrée dans l'élément de retenue (3) en occupant différentes positions crantées, ledit élément de retenue (3) comportant au moins un canal d'encliquetage (15) muni d'au moins un bord d'encliquetage (16), et ladite pièce d'ancrage (6) présentant au moins une partie de base (12) dotée d'une barrette dentée (13) pouvant être crantée dans le canal d'encliquetage (15), **caractérisé par le fait que** la pièce d'ancrage (6) forme un pivot de rotation (9, 10) avec l'appareil intégré (7).

2. Dispositif selon la revendication 1, **caractérisé par le fait que** la pièce d'ancrage (6) présente des éléments élastiques (20) limitateurs de rotation.

3. Dispositif selon la revendication 1, **caractérisé par le fait que** l'élément de retenue (3) comprend plusieurs canaux d'encliquetage (15) s'étendant transversalement par rapport au bord (2) de l'évidement.

4. Dispositif selon la revendication 1, **caractérisé par le fait que** l'élément de retenue (3) peut être dissocié d'avec le panneau de travail (1) par effet de levier.

5. Dispositif selon la revendication 4, **caractérisé par le fait que** l'élément de retenue (3) présente un logement fendu de vissage (5).

6. Dispositif selon la revendication 4, **caractérisé par le fait que** l'élément de retenue (3) présente une surface (22) d'engagement d'un levier.
